(19) Europäisches Patentamt

European Patent Office

Office européen des brevets

(11) **EP 0 997 543 A1**

(12) **EUROPEAN PATENT APPLICATION**

(43) Date of publication:
**03.05.2000 Bulletin 2000/18**

(51) Int Cl.⁷: **C22C 1/04**, B22F 1/00, H01M 4/38, H01M 4/02, H01M 4/40

(21) Application number: **99120914.9**

(22) Date of filing: **29.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **29.10.1998 IL 12680798**

(71) Applicant: **RAMOT UNIVERSITY AUTHORITY FOR APPLIED RESEARCH & INDUSTRIAL DEVELOPMENT LTD.**
Tel Aviv 61392 (IL)

(72) Inventors:
• **Peled, Emanuel**
  **40500 Even Yehuda (IL)**
• **Ulus, Avi**
  **53488 Givataim (IL)**

(74) Representative: **Modiano, Guido, Dr.-Ing. et al Modiano, Josif, Pisanty & Staub, Baaderstrasse 3 80469 München (DE)**

(54) **Nanostructure alloy anodes, process for their preparation and lithium batteries comprising said anodes**

(57) Structure comprising metal alloys in the form of nanoparticles, which are bound together. The particle size is about 20 to 500 nm. The nanoparticles are bound together by being plated on a support. The alloys contain tin and/or zinc as the main component. The alloys may also contain about 40 to 90 atomic percent of the main component, and may contain other elements selected from the group comprising carbon, up to 25% atomic oxygen as impurity and a metal element, most preferably antimony, zinc, silver, copper, iron, bismuth, cobalt, manganese or nickel.

Fig. 1

## Description

### Field of The Invention

The present invention relates generally to a structure comprising a support plated with metal alloy nanoparticles, particularly of tin and zinc based alloys, to electrodes, particularly anodes for rechargeable lithium batteries, to the use of said structure as electrode, and to batteries comprising such electrodes.

### Background of the Invention

Two important properties make tin and zinc alloys preferred candidates for use as anodes in lithium-ion batteries: high reversible capacity and high melting point of the $Li_x$-Sn phases. It has been demonstrated by Besenhard, J. O., and Winter, M., in J. *Power Sources,* 68 p. 87 (1997) that reducing the size of the alloy particles resulted in a longer charge/discharge cycle life. Those authors, however, did not prepare or test alloy nanoparticles. The charge/discharge cycle life of the alloy is dependent upon the resilience of the alloy under the mechanical stress induced by the volume change which occurs during the penetration of lithium into and its removal from the alloy during the charge/discharge cycle. When the alloy consists of coarse alloy particles, it is less resilient, and thus the volume changes which occur during the cycle cause the alloy to crack and subsequently the host material to pulverize, hence losing electrical contact. In spite of tin and zinc alloys' preferred characteristics in terms of reversible capacity and high melting point of the $Li_x$-Sb or $Li_x$-Zn phases, their shorter cycle life as a result of low dimensional stability, made the carbon-based electrodes the preferred electrodes in commercial lithium batteries.

Therefore it is highly desirable to provide metal alloy electrodes of improved dimensional stability, high reversible electrical capacity, low irreversible capacity and a long electrical charge/discharge life cycle.

It is a purpose of the present invention to provide electrodes having the aforesaid improved properties.

It is another purpose to provide a process for making said electrodes.

It is a further purpose to provide rechargeable lithium batteries comprising electrodes that impart to the batteries improved properties.

It is a still further purpose to provide a structure comprising certain metal alloys in the form of bound nanoparticles.

It is a still further purpose to provide of process for the preparation of said structure.

Other purposes and advantages of the invention will appear as the description proceeds.

### Summary of the Invention

The present invention includes a structure, particularly adapted to be used as electrode component in batteries, which comprises metal alloys in the form of nanoparticles, wherein the particle size is about 20 to 500 nm, and wherein the nanoparticles are bound together, preferably by being plated on a support. Said alloys are particularly tin and/or zinc based alloys, viz. contain tin and/or zinc as the main component, tin being preferred. They preferably contain about 40 to 90 atomic percent of the main component, and may contain other elements selected from the group comprising carbon and a metal element, most preferably antimony, zinc, silver, copper, iron, bismuth, cobalt, manganese or nickel, wherein at least 40 wt% of the elements in the alloy are elements that can be reversibly lithiated.

The present invention further includes a process for the preparation of the preferred form of said structure, comprising forming the alloys as nanoparticles by electroplating them on a conductive support of carbon or a metal, preferably copper or nickel. Preferably, the electroplating that produces the nanostructure is carried out directly on the current collector of the battery anode, at current density close to or above the limiting current density for the metal deposition, more preferably from one half of said limiting current density to 50 times larger than said limiting current density. In this way, the need for a binder of the anode powder is eliminated and the anode capacity is increased. Said current density for the electrodeposition of the metals. In this process some oxygen may be introduced into the alloy and remain as an impurity in the alloy.

The present invention also includes the electrodes, particularly the anodes for rechargeable lithium batteries, comprising a support plated with tin and/or zinc based alloys in the form of nanoparticles, particularly when directly obtained by the aforesaid process.

Electrodes according to the invention, particularly the anodes for rechargeable lithium batteries, can be made by binding said metal alloy nanoparticles together by means of a binder, in the absence of a support.

The electrodes according to the invention are characterized in having improved dimensional stability under electrical charge/discharge conditions, high reversible electrical capacity, low irreversible electrical capacity and a long electrical charge/discharge cycle life.

The use of the said alloy nanoparticles as, or in, anodes of rechargeable lithium batteries, having improved charge/discharge cycle life, is another aspect of the invention.

The invention further includes batteries having electrodes according to the invention, particularly rechargeable lithium batteries having the aforesaid anodes. Preferably, said batteries include a cathode which is a lithiated transition metal oxide or metal sulfide selected from among $LiCoO_2$, $LiNiO_2$, $LiMn_2O_4$, $Li_3V_2O_5$, $LiTiS_2$, or is one of said materials wherein up to 20 atomic percents of the transition metal is replaced by another metal selected from among Al, B, Ni, Mn, Fe, Co, Mg, Ca.

## Brief Description of the Figures

Fig. 1: This figure describes the result of cyclic voltammetry of 3.4 g/L SnO and 0.8g/L $Sb_2O_3$ in 3M $H_2SO_4$ solution. Upper curve (+) describes the cathodic direction and the lower curve describes the anodic direction. The limiting current density for the deposition of tin and antimony can be calculated from this figure.

Fig. 2 to 5: These figures show results of XRD analyses of batches number ESN 4, 6, 7, & 8 respectively These figures confirm the presence of antimony in the alloy and show that all of it is in the form of SnSb (Stistaite) alloy. Tin is present in the metallic form, and in the stistaite form, with the exception of fig. 4 which describes ESN 7, this is probably due to the poor detection limit of the XRD (X-ray diffraction) detector.

Fig. 6: This figure summarizes the results of culometric titration of batches ESN 4, 6, 7 and 8.

Fig. 7: The results of cycle life tests of batches ESN 4, 6, 7 and 8 are summarized in this figure. This figure shows that at least 40 cycles have been obtained when ESN 6, ESN 7, and ESN 8 were used.

Fig. 8: The results of the rate capability tests of batches number: ESN 4, 7, & 8 are summarized in figure 8: the rate capability decreases with the increase in the antimony content.

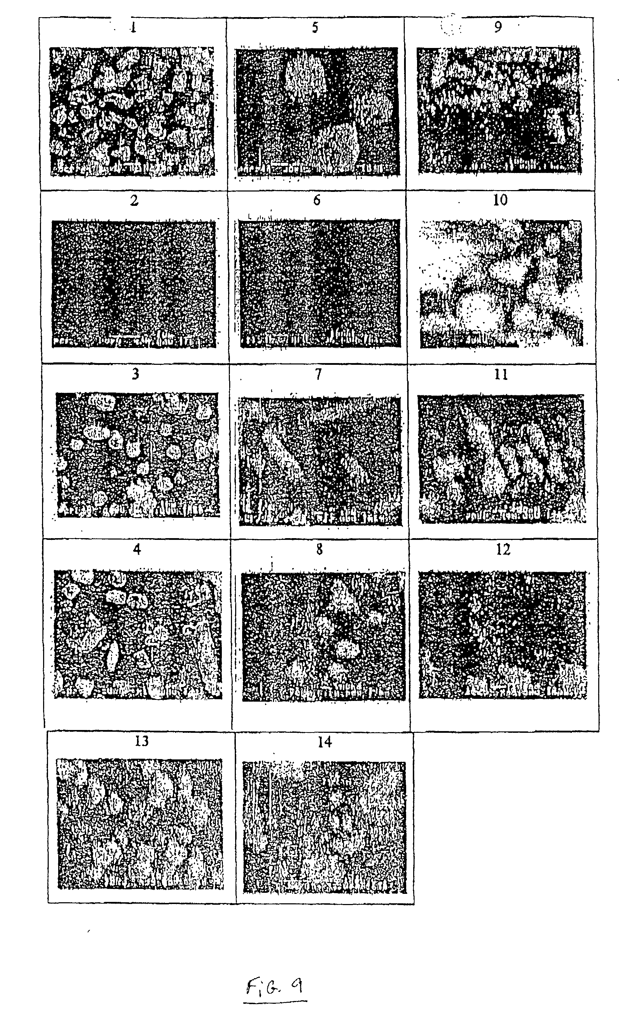

Fig. 9: pictures of the morphology of samples described in table 3.

## Detailed Description of a Preferred Embodiment of the Invention

According to a preferred embodiment of the invention, the metal alloy comprises 40-90 atomic percent Sn and/or Zn and up to 20 atomic percent carbon, the balance being made up of metals selected from among: Sb, Sn, Co, Ni, Fe, Cu, Bi, Mn and Ag, and/or oxygen as an impurity.

The plating bath for the anode alloy is an acid aqueous solution, working at 10° to 80°C, which is preferably a 0.5 to 5 molar solution, preferably 2 to 4 molar solution of an acid selected from $H_2SO_4$, HCl or $HBF_4$, containing less than 10 g/L Zn and/or Sn and up to 2 g/L other metals, dissolved as oxide, metal complex, or salt, preferably selected from Sb, Fe, Bi, Co, Cu, Ni, and Mn, and up to 0.3 g/L dispersion of high surface area carbon or graphite, the task of which is to form nucleation centers and to add to the mechanical stability of the alloy. Some of the elements of the alloy, like Sn, Zn, Bi, Ag, can alloy lithium, while others, like Cu, Co, Ni, Fe, do not, as pure metals, alloy lithium, and are introduced in order to improve the mechanical stability of the alloy anode and the cycle life. Increasing the atomic concentration of the elements of the first group leads to an increase of anode capacity and to a decrease of cycle life, while increasing the atomic concentration of elements of the second group does the opposite. The nanosize structure is formed by deposition of the alloy from dilute plating solutions (less than lOg/L metal) at current densities close or preferably above the limiting current density iL of the metals in the electroplating bath, e. g. at about 10 to 250 mA/cm$^2$. Plating of metals from higher concentrations of plating solutions, at current densities much smaller than iL, generally gives good laminar metal coating, but does not generate nanoparticles.

In the case of cations, iL follows the equation

$$i_L = -nFDC_b/\delta(1-t^+)$$

wherein n is the number of electrons, F is the Faraday constant, $\delta$ is the thickness of the diffusion layer, $C_b$ is the bulk concentration, and $t^+$ is the transfer coefficient of the metal cation.

According to another preferred embodiment the alloy was electroplated at about 10° to 80°C, in an aqueous solution comprising of about 0.5 to 5 molar acid selected from: $H_2SO_4$, HCl, $HBF_4$ and a stable and soluble combination constituted by the concurrent presence at least of two compounds, each of one of two metals, at least one of which Sn or Zn in the form of soluble oxide, complex or salt. Said solution preferably comprises the following amounts of the following metals: 1 to 10 g/L of Sn, 0.1 to 5 g/L Sb, 0.1 to 10 g/L Zn, 0.1 to 3 g/L Cu, 0.1 to 3 g/L Ni or Co or Ag. Optionally a suspension of up to 0.3 g/L of high surface area carbon or graphite is added to the solution.

In a modification of the above embodiment, the aqueous solution, instead of being a 0.5 to 5 molar acid solution, is a 0.5 to 5 molar solution of a base preferably selected from KOH or NaOH.

The alloy anodes of the invention can be used in lithium batteries with both non-aqueous aprotic and polymer electrolyte. Liquid electrolytes are selected from among aprotic solvents, preferably EC (ethylene carbonate), DEC (diethyl carbonate), DMC (dimethyl carbonate), PC (propylene carbonate), gamma BL (butyrolactone), EMC (ethyl methyl carbonate), THF (tetrahydrofuran), dioxolan, DME (1,2-dimethoxyethane) and glimes. The salts can be selected from: $LiAsF_6$, $LiPF_6$, $LiBF_4$, $LiCF_3SO_3$, $LiN(CF_3SO_2)_2$. For polymer electrolyte cells, known lithium salts, e.g. selected from the aforementioned ones, can be used. The polymers are selected from a group that have oxygen and/or nitrogen groups that can complex the lithium salts to give good ionic conductivity . Said polymers are selected from among polyethylene oxide (PEO), polypropylene oxide (PPO), polyacrylonitrile (PAN) and their derivatives, the preferred polymer electrolyte being one based on derivatives of PEO.

In the aforesaid embodiments of the invention, the maximum reversible capacity was 700 mAh/g ( based on the total electrode mass excluding the current collector) and the minimum irreversible capacity was 15%. The reversible capacity, in tin rich alloys, did not change with current density in the range of 0.1 to 1mA/cm$^2$, and dropped to 55% at 4 mA/cm$^2$. Depending on their composition, these alloys had 10 to over 40 stable 100% charge-discharge cycles. Cycle life found to increase with the content of antimony and copper.

Anodes made according to the invention were cycled versus lithium between 0 to 1.0 Volts at current densities from 0.02 to 4 mA/cm$^2$, in 1$\underline{M}$ $LiAsF_6$, PC or EC/DEC solutions. For tin rich alloys, the insertion curve (at 0.02 mA/cm$^2$) has three voltages plateaus at 685 mV, 570 mV and 440 mV. The de-insertion curve (at 0.2 mA/cm$^2$) has less definite plateaus, about 200 mV higher than those of the insertion curve, indicating that the overpotential of the de-insertion process is higher than that of the insertion.

The mechanical stability of the alloy can be improved two ways: 1 - by electroplating of a thin inert (20 to 400 nm) layer of inert metal like Ni, Cu, or by coating the alloy with a thin polymer-carbon matrix by dipping the alloy anode in, for example, a solution of polymer like PVDF and a suspension of carbon or graphite. An example is cyclopentanon solution of 10-50 g/L PVDF and 20-100 g/L high surface area carbon or graphite. The last step is drying the solvent.

The following examples are for illustrative purposes and should not be construed as limitative.

## Example 1

In order to determine the limiting current density, a solution containing 3.4g/L SnO and 0.8g/L $Sb_2O_3$ in 3M $H_2SO_4$ was prepared. Cyclic Voltammetry was performed with sweep rate of 10mV/sec. The scanning began at the substrate's (Copper) OCV (open circuit voltage). The CV setup was similar to the experimental setup in terms of cell structure, temperature, and convection (see Example 2).

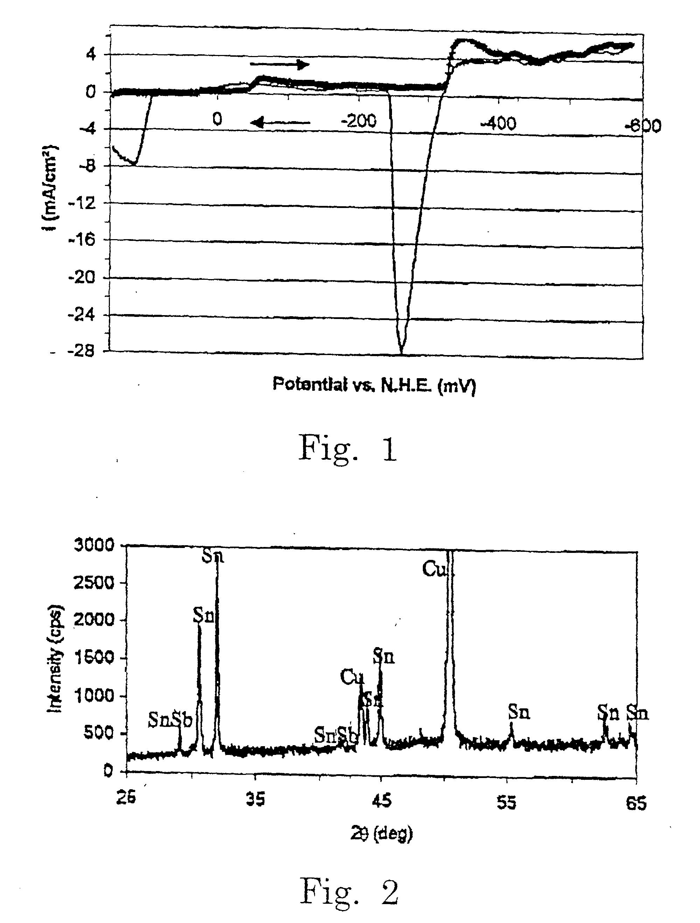

The limiting current density for tin and antimony deposition can be calculated from figure 1: it is 1.6mA/cm$^2$ at -64mV vs. NHE for antimony and 4.7mA/cm$^2$ at -350mV vs. NHE for tin.

## Example 2 - Plating Procedure

Solutions (with different combinations) of tin, antimony, copper, nickel, zinc compounds and Shawinigan Black (SB) were prepared in 1$\underline{L}$ glass or polypropylene beaker, which contained: ½L 3$\underline{M}$ $H_2SO_4$ or 3$\underline{M}$ KOH (unless otherwise stated). Table 1 summarizes the composition of each solution.

Table 1:

| Summary of Plating Solutions. | | | | | | |
|---|---|---|---|---|---|---|
| Batch code and (type of solution) | Weight of SnO (g) | Weight of $Sb_2O_3$ (g) | Weight of $CuSO_4 \times 5H_2O$ (g) | Weight of $NiSO_4 \times 6H_2O$ (g) | Weight of $ZnSO_4 \times 6H_2O$ (g) | Weight of (SB) (g) |
| 0 (basic) | 1.7 | - | - | - | - | - |
| A (basic) | *14.25 | - | - | - | - | 0.1 |
| B (basic) | 8.5 | - | - | - | - | - |
| C (basic) | 8.5 | - | - | - | - | 0.1 |
| D (**) | *28.5 | - | - | - | - | - |
| E (acidic) | 7 | - | - | - | - | - |
| F (acidic) | 3.4 | - | 1.05 | - | - | - |

(*) = $SnCl_2 \times 2H_2O$,
(**) = 3$\underline{M}$ NaOH

Table 1: (continued)

| Summary of Plating Solutions. | | | | | | |
|---|---|---|---|---|---|---|
| Batch code and (type of solution) | Weight of SnO (g) | Weight of $Sb_2O_3$ (g) | Weight of $CuSO_4 \times 5H_2O$ (g) | Weight of $NiSO_4 \times 6H_2O$ (g) | Weight of $ZnSO_4 \times 6H_2O$ (g) | Weight of (SB) (g) |
| G (acidic) | 1.7 | - | 0.5 | - | - | - |
| H (acidic) | 1.7 | - | 0.5 | 0.63 | - | - |
| I (acidic) | 1.7 | - | 0.5 | - | 1.21 | - |
| K (acidic) | 1.7 | - | 0.5 | 0.63 | 0.605 | - |
| ESN 4 (acidic) | 3.4 | 0.16 | - | - | - | 0.1 |
| ESN 6 (acidic) | 1.7 | 0.24 | - | - | - | 0.1 |
| ESN7 (acidic) | 1.2 | 0.44 | - | - | - | 0.1 |
| ESN8 (acidic) | 1.7 | 0.3 | 0.26 | - | - | 0.1 |
| ESN 9 (acidic) | 1.7 | 0.24 | 0.26 | - | 0.3 | - |
| ESN10 (acidic) | 1.7 | 0.4 | 0.35 | - | - | 0.1 |

A copper foil (1cm × 15cm) was placed between two Teflon plates (one of them has a window with an area of 1cm × 2cm exposed to the solution), and dipped for 30 seconds at room temperature in a cleaning solution ($HNO_3$: $H_3PO_4$:$CH_3COOH$ - 1:1:1). The copper foil was then washed with distilled water (10MΩ) and put in the plating bath which was stirred with the use of a magnetic stirrer. The counter electrode was made of two graphite rods (4.5cm × d = 0.2mm). The plating current density was 245±5mA/cm$^2$ and the plating time was 2 minutes. After plating the electrodes were washed again, dipped in 2 - Propanol and vacuum dried at 100°C for 3 hours.
Table 2 shows the results of the EDS and XPS analysis of batches number ESN 4, 6, 7, & 8.

Table 2:

| EDS and XPS Analysis | | |
|---|---|---|
| Batch code | Atomic ratio (XPS analysis) | Sn:Sb Atomic ratio (EDS analysis) |
| ESN 4 | Sn:Sb:C:O - 67:6:4:23 | 91:10 ±6% |
| ESN 6 | - | 53:10 ±1% |
| ESN 7 | - | 14:10 ±3% |
| ESN 8 | - | Sn:Sb:Cu-34:10:4 ±7% |

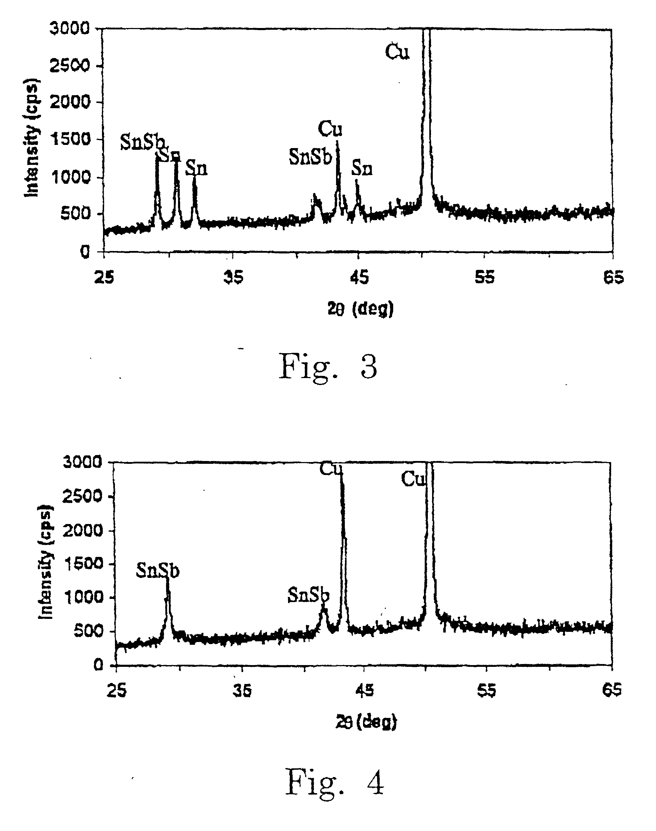

Figures 2 - 5 show results of XRD analyses of batches number ESN 4, 6, 7, & 8. These figures confirm the presence of antimony in the alloy and show that all of it is in the form of SnSb (Stistaite) alloy. Tin is present in the metallic form (except for ESN 7 which is probably due to the poor detection limit of the XRD detector), and in the stistaite form.


Example 3

Alloys have been plated as described in example 2. Table 3 shows the morphologies obtained at several current densities (5 - 245mA/cm$^2$) at 25 - 35°C and their distance from the limiting current density. Particles in the size of 100nm have been obtained in acidic solutions and particles in the size of 500nm have been obtained in basic solutions. A good high quality metal films are commonly produced from plating bath containing ten times higher metal concentration and at current density much lower then $i_L$. However, at lower concentration then lOg/L when I approaches $i_L$, small particles are formed and when i is much greater than $i_L$, fractal (or tree like) structures are formed, which consist of very small nanosize (about 100nm) alloy particles.

## Table 3: Summary of Morphology Experiments

| Composition: 3.4g/L SnO 3M KOH | | | |
|---|---|---|---|
| Sample Number | Morphology | Plating current density – mA/cm² and time (min) | $i/i_L$ (for Sn) |
| 1 | Picture 1 | 245 (2) | 61 |
| 2 | Picture 2 | 150 (3) | 37 |
| 3 | Picture 3 | 100 (4) | 25 |
| 4 | Picture 4 | 50 (8) | 12 |
| 5 | Picture 5 | 20 (10) | 5 |
| 6 | Picture 6 | 10 (10) | 2.5 |
| 7 | Picture 7 | 5 (10) | 1.2 |

| Composition: 3.4g/L SnO, 1g/L CuSO₄×5H₂O, 1.26g/L NiSO₄×6H₂O , 3M H₂SO₄ | | | |
|---|---|---|---|
| Sample Number | Morphology | Plating current density - mA/cm² and time (min) | $i/i_L$ |
| 8 | Picture 8 | 245 (2) | 39 |
| 9 | Picture 9 | 150 (3) | 24 |
| 10 | Picture 10 | 100 (4) | 16 |
| 11 | Picture 11 | 50 (8) | 8 |
| 12 | Picture 12 | 20 (10) | 3.2 |
| 13 | Picture 13 | 10 (10) | 1.6 |
| 14 | Picture 14 | 5 (10) | 0.8 |

Example 4

The alloy electrodes were cycled with the use of MACCOR Battery Tester 2000 (16 bit) against lithium using 1M LiAsF$_6$ in PC as an electrolyte. The procedure for cycle life test was: Insertion: 0.2mA/cm$^2$ to 20mV, Insertion: for 1 hour at 20mV, Rest: 1 hour, De - insertion: 0.2mA/cm$^2$ to IV.

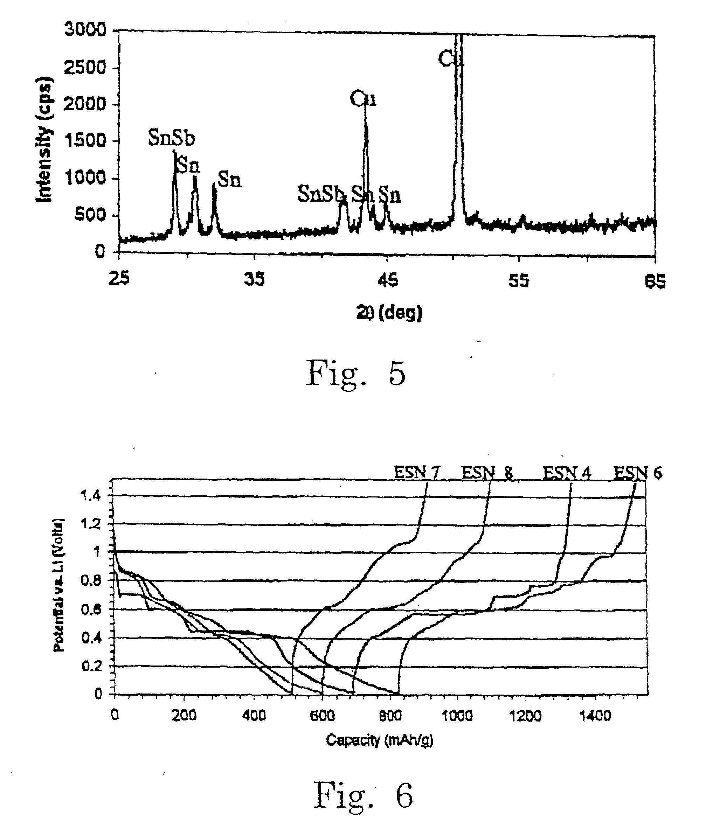

The procedure for culometric titration was: Insertion: 20μA/cm$^2$ to 10mV, Rest: 1 hour, De - insertion: 20μA/cm$^2$ to 1.5V. The procedure for rate capability measurements was: Insertion: 0.2mA/cm$^2$ to IOmV, Rest: 1 hour, De - insertion: 0.5 - 4mA/cm$^2$ to 1V. The results of the culometric titration of batches number: ESN 4, 6, 7, & 8 are summarized in figure 6. As the antimony content increases, one can see that the difference between the de - insertion curve and the insertion curve increases as well (alloys ESN 4 - 7). In ESN 4 the difference is 70 - 121mV, in ESN 6 the difference is 107 - 172mV, and in ESN 7 the difference is 141 - 175mV.

In the ESN 8 alloy, this difference is in the range of 141 - 175mV although the Sn:Sb:Cu atomic ratio is 34:10:4. Comparing this to the ESN 6 alloy (where the antimony content is lower), one can see that the difference in the two curves is similar.

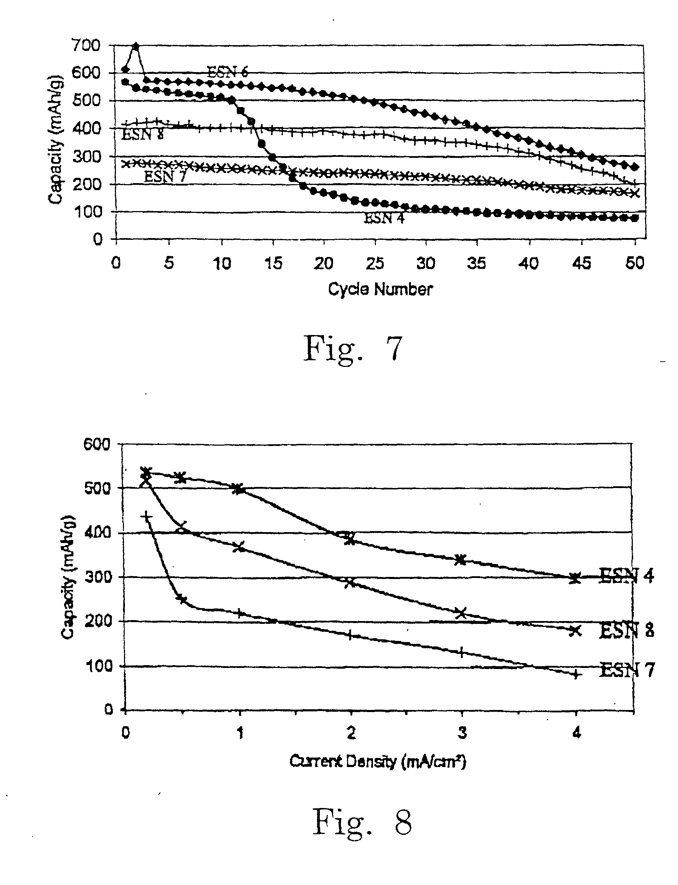

The results of the cycle life tests of batches number: ESN 4, 6, 7, & 8 are summarized in figure 7. This figure shows that at least 40 cycles have been obtained when ESN 6, ESN 7, and ESN 8 were used. The ESN 8 alloy shows the best performance with almost 400mAh/g in the 30th cycle. In general, the stability of the capacity increases with the antimony content.

The results of the rate capability tests of batches number: ESN 4, 7, & 8 are summarized in figure 8: the rate capability decreases with the increase in the antimony content. These results prove that the alloy anode according to this invention can be used as an anode for lithium - batteries: it's capacity exceeds 700mAh/g of alloy (ESN 6 Figure 6) which is almost twice larger then the graphite capacity (372mAh/g).

Example 5

A 2032 coin cell consisting of: ESN 8 anode, LiCoO$_2$ (Merck) Tefzel Separator, and 1M LiPF$_6$ EC:EMC (1:1) electrolyte was assembled and cycled at 0.2mA/cm$^2$ between 4.1 and 2.5V with the use of MACCOR Battery Tester 2000 (16 bit). It had over 40 stable cycles with average discharge voltage of 3.1V.

While embodiments of the invention have been described by way of illustration, it should be understood that they are not limiting and that many variations, modifications and adaptations can be carried out in the process and the products of the invention, without exceeding the scope of the claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. Structure comprising metal alloys in the form of nanoparticles, wherein the particle size is about 20 to 500 nm, and wherein the nanoparticles are bound together.

2. Structure according to claim 1, wherein the nanoparticles are bound together by being plated on a support.

3. Structure according to claim 1, wherein the alloys contain tin and/or zinc as the main component.

4. Structure according to claim 3, wherein the alloys contain about 40 to 90 atomic percent of the main component, and may contain other elements selected from the group comprising carbon, up to 25% atomic oxygen as impurity and a metal element, most preferably antimony, zinc, silver, copper, iron, bismuth, cobalt, manganese or nickel.

5. Structure according to claim 4, wherein at least 40% of the elements in the alloy are elements that can be reversibly lithiated.

6. Structure according to claim 1, wherein the metal alloys comprise 40-90 atomic percent Sn and/or Zn, up to 20 atomic percent carbon and up to 25% atomic oxygen as impurity, the balance being made up of metals selected from among: Sb, Zn, Sn, Co, Ni, Fe, Cu, Bi, Mn and Ag.

7. Electrode comprising a structure according to claim 1, characterized in having improved dimensional stability under electrical charge/discharge conditions, high reversible electrical capacity, low irreversible electrical capacity and a long electrical charge/discharge cycle life when used as an anode in lithium battery.

8. Electrode comprising a structure according to claim 3, wherein the alloys directly obtained in the form of nanoparticles by electroplating the alloys on the current collector of a battery anode.

9. Process for the preparation of metal alloys in the form of nanoparticles, which comprises forming the nanoparticles by electroplating on a conductive support of carbon or a metal.

10. Process according to claim 9, wherein the metal is chosen from among copper or nickel.

11. Process according to claim 9, wherein the electroplating is carried out directly on the current collector of a battery anode.

12. Process according to claim 9, wherein the electroplating is carried out at current density close to or above the limiting current density for the metal deposition.

13. Process according to claim 12, wherein the electroplating is carried out at current density from one half of the limiting current density for the metal deposition to 50 times larger than said limiting current density.

14. Rechargeable lithium battery having as anode an electrode according to claim 7.

15. Use of structures according to claim 1 as anodes in rechargeable lithium batteries, having improved charge/discharge cycle life.

16. Process according to claim 9, wherein the electroplating takes place in a plating bath which contains an acid aqueous solution, which is preferably a 0.5 to 5 molar solution of an acid selected from $H_2SO_4$, HCl or HBF4, containing less than 10 g/L Sn and/or Zn and up to 2 g/L other metals, dissolved as oxide or salt or metal complex, preferably selected from Sb, Fe, Bi, Co, Mn, Cu, Ni, and up to 3 g/L dispersion of high surface area carbon or graphite

17. Process according to claim 9, wherein the electroplating is carried out in a plating bath which contains a 2 to 4 molar acid solution.

18. Process according to claim 9, wherein the plating bath is a 0.5 to 5 molar solution of a base, containing less than 10 g/L Sn and/or Zn and up to 2 g/L other metals, dissolved as oxide, salt, or metal complex, preferably selected from Sb, Fe, Bi, Co, Cu, Ni, Mn and up to 0.3 g/L dispersion of high surface area carbon or graphite.

19. Process according to claim 18, wherein the base is selected from KOH and NaOH.

20. A rechargeable lithium battery, assembled in the discharge state, consisting of:

A - an anode made of an alloy that can be electrochemically charged with lithium where in this alloy is made of nano size, 1 to 1000 nanometer, preferably 20 to 500 nanometer particles which can be aggregate into larger agglomerates of various shapes, this alloy anode consisting of metals selected from the group of tin, stibium, zinc, copper, bismuth, nickel, silver, and iron, carbon and oxygen as impurity, formed by electrodeposition at current density which is one half to 50 times larger than that of the limiting current density for the electrodeposition of the metals;
B - an aprotic nonaqueous or polymer electrolyte;
C - a lithiated transition metal oxide or metal sulfide cathode, preferably selected from the group $LiCoO_2$, $LiNiO_2$, $LiMn_2O_4$, $Li_3V_2O_5$, $LiTiS_2$ or these materials where up to 20 atomic percents of the transition metal is replaced by another metal selected from Al, B, Ni. Mn, Fe, Co, Mg, Ca.

21. A battery according to claim 20, where the alloy was electroplated in acidic aqueous solution on a current collector preferably made of carbon matrix, copper or nickel foil.

22. A battery according to claim 20, where the alloy was electroplated in basic aqueous solution on a current collector preferably made of_carbon matrix, copper or nickel foil.

23. A battery according to claim 20, where the alloy was electroplated at 10 to 80 degree Celsius in an aqueous solution consisting of 0.5 to 5 molar acid selected from $H_2SO_4$, Hcl, $HBF_4$ and a stable and soluble combination of at least two metals, one of which is eitherSn or Zn in the form of soluble oxide, complex or salt, selected from the group: 1 to 10 g/L of Sn, 0.1 to 5 g/L Sb, 0.1 to 10 g/L Zn, 0.1 to 3 g/L Cu, 0.1 to 3 g/L Ni or Co or Ag, and optionally a suspension of up to 0.3 g/L of high surface area carbon or graphite.

24. A battery according to claim 22, where the alloy was electroplated at 10 to 80 degrees Celsius, in an aqueous solution consisting of 0.5 to 5 molar base, selected from: KOH, NaOH, and a soluble and stable combination of at least two metals, one of which is either Sn or Zn in the form of soluble oxide, complex or salt, selected from the group: 1 to 10 g/L of Sn, 0.1 to 5 g/L Sb, 0.1 to 10 g/L Zn, 0.1 to 3 g/L Cu, 0.1 to 3 g/L Ni, Ag or Co, and optionally a suspension of up to 0.3 g/L of high surface area carbon or graphite.

25. A battery according to claims 20 to 24 where the battery electrolyte consists of solvent or solvent mixture selected from the group: PC, EC, DEC, DMC, EMC, gama-BL, THF, DME, PEGDME, and the salt is selected from the group: $LiAsF_6$, $LiPF_6$, $LiBF_4$, $LiCF_3SO_3$, $LiN(CF_3SO_2)_2$ or a mixture of these.

26. A battery according to claims 20 to 24, where the electrolyte is a polymer electrolyte based on salt selected from the group: $LiAsF_6$, $LiPF_6$, $LiBF_4$, $LiCF_3SO_3$, $LiN(CF_3SO_2)_2$, or a mixture of these and polymer that can complex these salts to give an ionically conductive matrix where the preferred polymer is polyethyleneoxide(PEO).

27. A battery according to claims 20 to 26, where the anode alloy consists of 40-90 atomic percents Sn, up to 20 atomic percents carbon and the balance are metals selected from Sb, Zn, Co, Ni, Fe, Cu, Bi, Ag.

28. A battery according to claims 20 to 26, where the anode alloy consists of 40-90 atomic percents Zn, up to 20 atomic percents carbon and the balance are metals selected from Sb, Sn, Co, Ni, Fe, Cu, Bi, Ag.

29. A battery according to claims 20 to 27, where the anode alloy is electroplated at current density of 5 to 250 mA/cm$^2$ in 2 to 4 molar $H_2SO_4$ or $HBF_4$ aqueous solution containing 2 to 5 g/L SnO or $SnSO_4$ and up to 2 g/L of soluble complex, oxide or salts of Sb, Zn, Co, Ni, Fe, Cu, Bi, Ag, selected in a way to form a stable solution.

30. A battery according to claims 20 to 26 and 28, where the anode alloy is electroplated at current density of 10 to 250 mA/cm$^2$ in 2 to 4 molar $H_2SO_4$ aqueous solution containing 2 to 10 g/L Zn and up to 2 g/L of complex, oxide or salts of Sb, Sn, Co, Ni, Fe, Cu, Bi, selected in a way to form a stable solution.

31. Structure according to claim 1, substantially as described.

32. Process for the preparation of metal alloys in the form of nanoparticles, substantially as described.

33. Electrode, substantially as described.

34. Lithium battery, substantially as described.

35. Use of alloys in the form of nanoparticles, substantially as described.

Fig. 1

Fig. 2

Fig. 3

Fig. 4

Fig. 5

Fig. 6

Fig. 7

Fig. 8

FIG. 9

# EP 0 997 543 A1

**European Patent Office**

## EUROPEAN SEARCH REPORT

Application Number

EP 99 12 0914

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BESENHARD J O ET AL: "Will advanced lithium-alloy anodes have a chance in lithium-ion batteries?" JOURNAL OF POWER SOURCES,CH,ELSEVIER SEQUOIA S.A. LAUSANNE, vol. 68, no. 1, 1 September 1997 (1997-09-01), pages 87-90, XP004100203 ISSN: 0378-7753 * page 88, column 1, paragraph 4; figures 3,7,9 * | 1-11,14, 15, 20-22, 25-27, 31-35 | C22C1/04 B22F1/00 H01M4/38 H01M4/02 H01M4/40 |
| X | BANERJEE S ET AL: "OPTICAL ABSORPTION OF COMPOSITES OF NANOCRYSTALLINE SILVER PREPARED BY ELECTRODEPOSITION" APPLIED PHYSICS LETTERS,US,AMERICAN INSTITUTE OF PHYSICS. NEW YORK, vol. 72, no. 9, 2 March 1998 (1998-03-02), pages 1027-1029, XP000742809 ISSN: 0003-6951 * page 1027, column 2, paragraph 2 - paragraph 3; table 1 * | 1,2,9,10 | |
| X | EP 0 855 752 A (CANON KK) 29 July 1998 (1998-07-29) * claim 1 * | 1,2,9 | TECHNICAL FIELDS SEARCHED (Int.Cl.7) B22F C22C H01M |
| P,X | EP 0 925 861 A (KAWATETSU MINING) 30 June 1999 (1999-06-30) * claim 1; figure 1 * | 1 | |
| | -/-- | | |

The present search report has been drawn up for all claims

| Place of search | Date of completion of the search | Examiner |
|---|---|---|
| THE HAGUE | 8 February 2000 | Gregg, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

European Patent
Office

**EUROPEAN SEARCH REPORT**

Application Number

EP 99 12 0914

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ZENG D ET AL: "SYNTHESIS AND CHARACTERIZATION OF NANOPHASE GROUP 6 METAL (M) AND METAL CARBIDE (M2C) POWDERS BY CHEMICAL REDUCTION METHODS" CHEMISTRY OF MATERIALS,US,AMERICAN CHEMICAL SOCIETY, WASHINGTON, vol. 5, no. 5, 1 May 1993 (1993-05-01), pages 681-689, XP000372516 ISSN: 0897-4756 * page 681, column 1, paragraph 1 - column 2, paragraph 1 * | 9 | |
| A | J ET AL: "Small particle size multiphase Li-alloy anodes for lithium-ion-batteries" SOLID STATE IONICS,NL,NORTH HOLLAND PUB. COMPANY. AMSTERDAM, vol. 90, no. 1-4, 1 September 1996 (1996-09-01), pages 281-287, XP004071677 ISSN: 0167-2738 | | |

TECHNICAL FIELDS
SEARCHED      (Int.Cl.7)

The present search report has been drawn up for all claims

| Place of search | Date of completion of the search | Examiner |
|---|---|---|
| THE HAGUE | 8 February 2000 | Gregg, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 12 0914

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2000

| Patent document cited in search report | | Publication date | Patent family member(s) | | Publication date |
|---|---|---|---|---|---|
| EP 0855752 | A | 29-07-1998 | CA<br>JP | 2228095 A<br>11242954 A | 28-07-1998<br>07-09-1999 |
| EP 0925861 | A | 30-06-1999 | JP | 11189801 A | 13-07-1999 |

EPO FORM P0459

For more details about this annex : see Official Journal of the European Patent Office, No. 12/82